# FASCICULE DE BREVET EUROPEEN

(11) **EP 0 307 781 B1**
(45) Date de publication et mention de la délivrance du brevet: **03.02.1993**
(21) Numéro de dépôt: 88114601.3
(22) Date de dépôt: 07.09.1988
(51) Int. Cl.: H04M 19/08

(54) **Système et dispositif de protection et de téléalimentation pour équipement connecté par deux transformateurs à une liaison de transmission à quatre fils**
Schutz- und Fernspeisesystem und Vorrichtung für eine durch zwei Transformatoren an eine 4-Direktübertragungsleitung gekoppelte Einrichtung
Protection and remote powering system and device for an equipment connected by two transformers to a 4-wire transmission link

(30) Priorité: 09.09.1987 FR 8712511
(43) Date de publication de la demande: 22.03.1989
(73) Titulaire: ALCATEL BUSINESS SYSTEMS, F-75008 Paris (FR)
(72) Inventeur: Douhet, Gérard, F-67100 Strasbourg (FR); Daviaud, Yves, F-67640 Fegersheim (FR)
(74) Mandataire: Weinmiller, Jürgen

(56) Documents cités:
- IEEE INTERNATIONAL TELECOMMUNICATIONS ENERGY CONFERENCE, Seventh International Telecommunications Energy Conference, Munich, 14-17 octobre 1985, pages 513-519, IEEE, New York, US; W. KRAUTKRÄMER et al.: "Remote power feeding of ISDN-terminals at the basic access"
- THE INTERNATIONAL SYMPOSIUM ON SUBSCRIBER LOOPS AND SERVICES, Atlanta, Georgia, 20-24 mars 1978, Conference Record, pages 190-194, The Communications Society of the IEEE etc.; G.N. LAWRENCE et al.: "Digital service to the subscriber"

## Description

L'invention concerne un système de protection et de téléalimentation et un dispositif de protection extracteur de téléalimentation pour équipement connecté par deux transformateurs à une liaison de transmission à quatre fils assurant la téléalimentation.

Elle concerne particulièrement les équipements téléalimentés dotés d'un transformateur d'émission d'impulsions et d'un transformateur de réception d'impulsions qui sont respectivement connectés chacun à une des deux paires de fils d'une liaison de transmission à quatre fils par laquelle l'équipement considéré est aussi partiellement ou totalement téléalimenté en courant continu. Ceci est par exemple le cas des équipements de liaison entre terminaux-ou adapteurs de terminaux- et autocommutateurs privés- ou réseaux locaux- qui sont définis en tant qu'équipements d'interface S dans les réseaux intégrant la téléphonie et les données actuellement désignés par le sigle RNIS. Le document intitulé en anglais "Remote power feeding of ISDN terminals at the basic access" publié par W. KRAUTKRAMER et B. SCHICKLING dans "IEEE International Telecommunication Energy Conference", en 1985, donne un exemple d'un tel équipement auquel est suceptible de s'appliquer l'invention.

Il est classique en téléphonie de doter les équipements de ligne des réseaux électroniques, tant spatiaux que temporels, de translateurs permettant d'interrompre la continuité de la liaison, entre une ligne à deux fils de transmission et d'alimentation et le réseau de connexion, pour les courants continus tout en assurant le passage des courants à fréquences vocales. Classiquement de tels translateurs comportent un transformateur à deux enroulements, dits primaires, et un enroulement, dit secondaire, auquel on associe un condensateur inséré entre les deux enroulements primaires.

Un exemple d'un tel agencement et extraction d'alimentation pour une liaison deux fils est donné dans le document intitulé en anglais "Digital service to the subscriber" publié par G.N. LAWRENCE et A.E.SHUTTLEWORTH en Mars 1978 dans la revue CONFERENCE RECORDS de la SOCIETE de COMMUNICATION de l'IEEE en mars 1978.

Le condensateur constitue un court-circuit pour les fréquences vocales transmises soit des deux enroulements primaires en série, vers l'enroulement secondaire soit inversement.

Ce condensateur interdit par contre la circulation du courant continu d'alimentation que fournit la ligne, dans les deux enroulements primaires. Un agencement d'extraction de téléalimentation permet de capter sélectivement le courant continu que fournit la ligne pour les besoins de l'équipement desservi par cette ligne.

Le condensateur et les deux enroulements primaires du transformateur travaillent avec des polarisations continues largement supérieures aux amplitudes des signaux à fréquences vocales ce qui ne favorise pas la transmission de ces derniers.

Le volume des enroulements primaires est nécessairement grand en raison de la faible résistance admissible pour ces enroulements et de la forte polarisation continue du circuit magnétique.

Classiquement on place sur la ligne des résistances de limitation de courant auxquelles on associe souvent des résistances à coefficient de température positif pour limiter les courants continus à des valeurs raisonables.

De telles dispositions prévues pour des signaux à fréquences vocales ne sont plus acceptables pour la transmission de données sous forme impulsionnelle avec des débits pouvant atteindre par exemple 96 Kbit/s.

Il est alors indispensable d'éliminer les résistances en ligne. Pour compenser l'élimination de ces résistances il est alors nécessaire de disposer d'un dispositif de protection permettant d'éviter l'échauffement des transformateurs et de limiter les perturbations pour l'équipement desservi par ce transformateur, en cas de court-circuit ou d'interversion des fils ou encore s'il y a injection de tensions industrielles de la gamme basse.

De plus, on cherche à réaliser des liaisons permettant des transmissions bi-directionnelles simultanées impliquant de fait une paire de fils par voie de transmission et un transformateur par paire de fils dans l'équipement considéré.

En conséquence la présente invention propose un système de protection et de téléalimentation pour équipement raccordé par deux transformateurs à une extrémité, dite alimentée, d'une liaison de transmission à deux paires de fils assurant aussi la téléalimentation de l'équipement à partir de son autre extrémité, dite alimentante, par l'intermédiaire d'un générateur de courant continu dont les deux bornes sont individuellement raccordées chacune à deux fils d'une, différente, des deux paires, au travers d'un, différent, des deux enroulements identiques interconnectés d'un transformateur, dit alimentant, relié à la paire considérée, les deux transformateurs situés à l'extrémité alimentée étant eux aussi individuellement raccordés chacun à un des deux fils d'une, différente, des paires au travers d'un des deux enroulement identiques interconnectés que comprend chacun de ces transformateurs, dits alimentés. Selon une caractéristique de l'invention, le système comporte un dispositif de protection extracteur de téléalimentation composé de deux ponts redresseurs reliés, d'une part, chacun par deux entrées aux bornes d'interconnexion de deux enroulements d'un transformateur alimenté différent, entre lesquelles est également raccordé un condensateur, dit intermédiaire, d'autre part en parallèle par leurs bornes de sortie où la téléalimentation pour l'équipement est récupérée.

La présente invention propose également un dispositif de protection extracteur de téléalimentation pour équipement raccordé par deux transformateurs à une extrémité, dite alimentée, d'une liaison de transmission à deux paires assurant aussi la téléalimentation de l'équipement à partir de son autre extrémité, dite alimentante, par l'intermédiaire d'un générateur de courant continu dont les deux bornes sont individuellement raccordées chacune à deux fils d'une, différente, des deux paires, au travers d'un, différent, des deux enroulements identiques interconnectés d'un transformateur, dit alimentant, relié à la paire considérée, les deux transformateurs situés à l'extrémité alimentée étant eux aussi individuellement raccordés chacun à un des deux fils d'une, différente, des paires au travers d'un des deux enroulements identiques interconnectés que comprend chacun de ces transformateurs, dits alimentés.

Selon une caractéristique de l'invention, le dispositif comporte deux ponts redresseurs reliés, d'une part, chacun par deux entrées aux bornes d'interconnexion des deux enroulements d'un transformateur alimenté différent, entre lesquelles est également raccordé un condensateur, dit intermédiaire, d'autre part en parallèle par leurs bornes de sortie, où la téléalimentation pour l'équipement est récupérée.

L'invention, ses caractéristiques et ses avantages sont précisés dans la description qui suit, en liaison avec la figure unique définie ci-dessous.

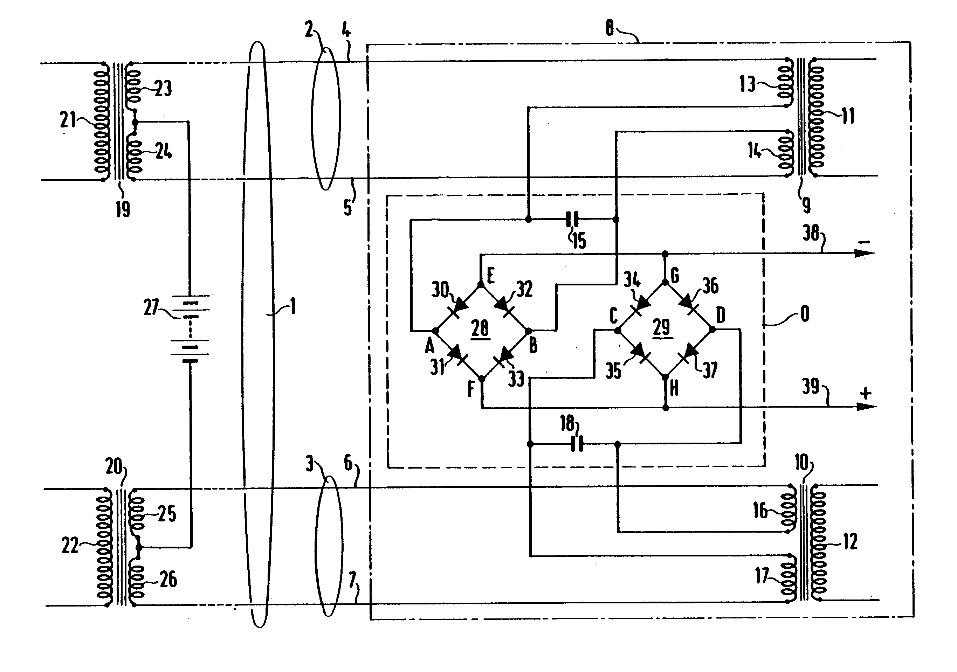

Cette figure 1 propose un schéma d'un système de protection et de téléalimentation comprenant le dispositif de protection extracteur de téléalimentation selon l'invention.

Le système de protection et de téléalimentation proposé sur la figure évoquée ci-dessus est destiné à être associé à une liaison de transmission 1- à deux paires 2, 3 de fils 4, 5 et 6, 7- prévue pour permettre une transmission bi-directionnelle de signaux de données et/ou de parole notamment lorsque ces signaux sont constitués sous forme de suites d'impulsions codées.

La liaison de transmission 1 dessert classiquement un équipement utilisateur 8 non développé ici, tel que par exemple un terminal de réseau RNIS, ou un adaptateur pour un tel terminal doté d'un circuit d'interface S selon les normes du Comité Consultatif International pour le Télégraphe et le Téléphone (CCITT). Cet équipement utilisateur 8 est connecté par deux transformateurs 9 et 10 à la liaison de transmission 1. Les deux transformateurs 9 et 10 assurent le plus souvent des transmissions de sens inverse et fonctionnent donc usuellement l'un, par exemple 9, en émetteur et l'autre en récepteur.

A cet effet, ils comportent chacun un enroulement connecté dans l'équipement, d'un manière ici non représentée, tel l'enroulement 11 pour le transformateur 9 et l'enroulement 12 pour le transformateur 10.

Chacun des transformateurs 9 ou 10 est individuellement connecté à une paire de fils de la liaison 1 par deux enroulements identiques reliées en série au travers d'un condensateur, dit intermédiaire, tels les enroulements identiques 13 et 14 connectés en série entre les fils 4 et 5 de la paire 2 au travers du condensateur intermédiaire 15 inséré entre ces enroulements 13, 14 ou encore tels les enroulements 16, 17 connectés en série entre les fils 6 et 7 de la paire 3 au travers du condensateur intermédiaire 18.

Les transformateurs 9 et 10 sont ici des transformateurs aptes à transmettre des impulsions dans le cadre d'une transmission bidirectionnelle à fort débit dans les deux sens de transmission, ils sont donc reliés par la liaison 1 à des agencements qui leurs sont respectivement complémentaires et que l'on a ici représenté sous la forme de deux transformateurs 19 et 20.

L'un des enroulements de chacun des transformateurs 19 et 20 est relié d'une manière non représentée aux organes d'un agencement qui dans le cas d'un réseau RNIS appartient par exemple à un autocommutateur, tel l'enroulement 21 pour le transformateur 19 et l'enroulement 22 pour le transformateur 20.

Dans la forme de réalisation proposée chacun des transformateurs 19, 20 comporte aussi deux enroulements identiques connectés en série entre les fils d'une des deux paires de la liaison 1 tels les enroulements 23 et 24 entre les fils 4 et 5 et les enroulements 25 et 26 entre les fils 6 et 7.

Un générateur de courant continu 27 permet de téléalimenter l'équipement 8 situé à une des extrémités, dite alimentée, de la liaison 1, à partir de l'autre extrémité dite alimentante, de cette liaison 1.

Selon une forme préférée de réalisation, l'équipement 8 est téléalimenté par un circuit fantôme associant les deux paires de fils de la liaison 1 et le générateur de courant continu 27 applique une polarité positive aux deux fils d'une paire, ici la paire 2, et une polarité négative aux deux fils de l'autre paire, ici la paire 3.

Une telle solution présente l'avantage de ne pas créer une circulation de courant continu en boucle au travers des enroulements de transformateur reliés aux fils d'une même paire et de diviser par deux l'intensité du courant continu passant dans chacun des deux fils exploités en parallèle de chaque paire.

Un dispositif de protection extracteur de téléalimentation 0 est placé à l'extrémité alimentée de la liaison 1, il comporte essentiellement deux ponts redresseurs 28, 29.

Les deux ponts redresseurs 28 et 29 ont leurs entrées A, B ou C, D respectivement reliées pour l'un aux bornes du condensateur 15 et pour l'autre aux bornes du condensateur 18, alors que leurs sorties E, F ou G, H sont reliées en parallèle aux fils 38, 39 de téléalimentation desservant l'équipement.

Les ponts redresseurs 28 et 29 sont ici de classique ponts à quatre diodes 30, 31, 32, 33 pour l'un et 34, 35, 36, 37 pour l'autre. Les points A et B, communs l'un à la cathode de la diode 30 et à l'anode de la diode 31, l'autre à la cathode de la diode 32 et à l'anode de la diode 33, sont reliés à la borne positive du générateur de courant continu 27 par les fils 4, 5 en parallèle.

De manière identique les points C et D commun à la cathode de la diode 34 et à l'anode de la diode 35, l'autre à la cathode de la diode 36 et à l'anode de la diode 37 sont reliés à la borne négative du générateur de courant continu 27 par les fils 6, 7 en parallèle.

La tension de téléalimentation est recueillie par les fils 38, 39 reliés l'un au bornes E et F respectivement communes aux cathodes des diodes 30, 32 et 34, 36 et l'autre aux bornes G et H respectivement communes aux anodes des diodes 31, 33 et 35, 37.

Le système de protection et de téléalimentation proposé a pour avantage de permettre l'utilisation de transformateurs 9, 10 réduits en taille et/ou fonctionnant à des températures plus basses que ceux utilisés avec les techniques antérieures en raison de la réalisation du circuit d'alimentation en fantôme, de la manière évoquée plus haut.

Le montage en double pont permet d'inverser les polarités d'alimentation du générateur de courant continu 27, sans influencer le fonctionnement du système. Il permet également au système de supporter sans inconvénient les éventuels court-circuits et mélanges accidentels entre les fils de la liaison 1, les conséquences au niveau des transformateurs 9 et 12 étant négligeables dans la mesure où les tensions continues appliquées restent inférieures aux limites acceptées par les condensateurs intermédiaires qui protègent alors les enroulements de transformateur reliés à eux.

De même l'application de tension alternatives industrielles de la gamme basse restent sans influence notable à partir du moment où les condensateurs intermédiaires sont choisis de capacité élevée et de tenue diélectrique suffisante, par exemple 2,2 microfarads et cent volts en alternatif.

## Revendications

1. Système de protection et de téléalimentation pour équipement (8) raccordé par deux transformateurs (9, 10) à une extrémité, dite alimentée, d'une liaison de transmission (1) à deux paires (2, 3) de fils (4, 5, 6, 7) assurant aussi la téléalimentation de l'équipement à partir de son autre extrémité, dite alimentante, par l'intermédiaire d'un générateur de courant continu (27) dont les deux bornes sont individuellement raccordées chacune à deux fils d'une, différente, des deux paires, au travers d'un, différent, des deux enroulements identiques interconnectés d'un transformateur (20 ou 21), dit alimentant, relié à la paire considérée, les deux transformateurs situés à l'extrémité alimentée étant eux aussi individuellement raccordés chacun à un des deux fils d'une, différente, des paires au travers d'un des deux enroulements identiques (13, 14 ou 16, 17) interconnectés que comprend chacun de ces transformateurs, dits alimentés, caractérisé en ce qu'il comporte un dispositif de protection extracteur de téléalimentation (0) composé de deux ponts redresseurs (28, 29) reliés, d'une part, chacun par deux entrées aux bornes d'interconnexion des deux enroulements d'un transformateur alimenté différent, entre lesquelles est également raccordé un condensateur, dit intermédiaire (15 ou 18), d'autre part en parallèle par leurs bornes de sortie (E, G ou F, H) où la téléalimentation pour l'équipement est récupérée.

2. Dispositif de protection extracteur de téléalimentation pour équipement (8) raccordé par deux transformateurs (9, 10) à une extrémité, dite alimentée, d'une liaison de transmission (1) à deux paires (2, 3) de fils (4, 5, 6, 7) assurant aussi la téléalimentation de l'équipement à partir de son autre extrémité, dite alimentante, par l'intermédiaire d'un générateur de courant continu (27) dont les deux bornes sont individuellement raccordées chacune à deux fils d'une, différente, des deux paire, au travers d'un, différent, des deux enroulements identiques interconnectés d'un transformateur (20 ou 21), dit alimentant, relié à la paire considérée, les deux transformateurs situés à l'extrémité alimentée étant eux aussi individuellement raccordés chacun à un des deux fils d'une, différente, des paires au travers d'un des deux enroulements identiques (13, 14 ou 16, 17) interconnectés que comprend chacun de ces transformateurs, dits alimentés, caractérisé en ce qu'il comporte deux ponts redresseurs (28, 29) reliés, d'une part, chacun par deux entrées aux bornes d'interconnexion des deux enroulements d'un transformateur alimenté différent, entre lesquelles est également raccordé un condensateur, dit intermédiaire, (15 ou 18), d'autre part en parallèle par leurs bornes de sortie (E, G ou F, H) où la téléalimentation pour l'équipement est récupérée.

## Claims

1. A protection and remote power feeding system for equipment (9) connected by two transformers (9, 10) to one end, referred to as the fed end, of a transmission link (1) with two pairs (2, 3) of wires (4, 5, 6, 7) also ensuring the remote power feeding of the equipment from its other end, referred to as the feeding end via a d.c. generator (27), whose two terminals are individually connected each to two wires of one different pair of the two pairs via one different winding of two identical interconnected windings of a transformer (20 or 21 resp.), referred to as feeding transformer and connected to the considered pair, with the two transformers located at the fed end being also individually connected each to one of the wires of one different pair of the pairs via one of the two identical interconnected windings (13, 14 or 16, 17 resp.) of these transformers, referred to as fed transformers, characterized in that the system comprises a remote power feeding extractor protection device (0) composed of two rectifier bridges (28, 29), each bridge being connected, on the one hand, by two inputs to the interconnection terminals of the two windings of a different fed transformer, with a capacitor (15 or 18 resp.), referred to as intermediate capacitor, being also interconnected between said windings, and on the other hand, also connected in parallel by their outputs (E, G or F, H), where the remote power feeding is recovered.

2. A remote power feeding extraction protection device for equipment (8) connected by two transformers (9, 10) to one end, referred to as the fed end, of a transmission link (1) with two pairs (2, 3) of wires (4, 5, 6, 7) also ensuring the remote power feeding of the equipment from its other end, referred to as the feeding end via a d.c. generator (27), whose two terminals are individually connected each to two wires of one different pair of the two pairs via one different winding of two identical interconnected windings of a transformer (20 or 21 resp.), referred to as feeding transformer and connected to the considered pair, with the two transformers located at the fed end being also individually connected each to one of the wires of one different pair of the pairs via one of the two identical interconnected windings (13, 14 or 16, 17 resp.) of these transformers, referred to as fed transformers, charcterized in that the device includes two rectifier bridges (28, 29), each bridge being connected, on the one hand, by two inputs to the interconnection terminals of the two windings of a different fed transformer, with a capacitor, referred to as intermediate capacitor (15 or 18 resp.), being also interconnected between said windings, and on the other hand, also connected in parallel by their outputs (E, G or F, H), where the remote power feeding is recovered.

## Patentansprüche

1. Schutz- und Fernspeisesystem für eine Einrichtung (8), die über zwei Transformatoren (9, 10) an ein "gespeistes" Ende einer Übertragungsstrecke (1) mit zwei Paaren (2, 3) von Drähten (4, 5, 6, 7) angeschlossen ist, die auch die Fernspeisung der Einrichtung vom anderen Leitungsende her, "speisendes Ende" genannt, über einen Gleichstromgenerator (27) bewirkt, dessen einzelne Anschlüsse über je eine der beiden miteinander verbundenen identischen Wicklungen eines Speisetransformators (20 bzw. 21) an je beide Leitungen eines der beiden Drahtpaare angeschlossen sind, wobei die beiden am gespeisten Ende angeordneten Transformatoren ebenfalls einzeln je an einen der beiden Drähte eines der Paare über eine der beiden miteinander verbundenen identischen Wicklungen (13, 14 bzw. 16, 17) dieses Transformators angeschlossen sind, dadurch gekennzeichnet, daß das System eine Fernspeisungsauskopplungs-Schutzeinrichtung (0) umfaßt, die aus zwei Gleichrichterbrücken (28, 29) besteht, die einerseits je mit zwei Eingängen an die Zwischenanschlüsse der beiden Wicklungen eines der gespeisten Transformatoren angeschlossen sind, zwischen die außerdem ein Kondensator (15. bzw. 18), Zwischenkondensator genannt, geschaltet ist, und die andererseits mit ihren Ausgangsanschlüssen (E, G bzw. F. H) parallelgeschaltet sind, an denen die Fernspeisung für die Einrichtung wiederaufgenommen wird.

2. Schutz- und Fernspeisevorrichtung für eine Einrichtung, die über zwei Transformatoren (9, 10) an ein "gespeistes" Ende einer Übertragungsstrecke mit zwei Paaren (2, 3) von Drähten (4, 5, 6, 7) angeschlossen ist, die auch die Fernspeisung der Einrichtung vom anderen Leitungsende her, "speisendes" Ende genannt, über einen Gleichstromgenerator (27) bewirkt, dessen einzelne Anschlüsse je über eine der beiden miteinander verbundenen identischen Wicklungen eines Speisetransformators (20 bzw. 21) an je beide Leitungen eines der beiden Drahtpaare angeschlossen sind, wobei die beiden am gespeisten Ende angeordneten Transformatoren ebenfalls einzeln je an einen der beiden Drähte eines der Paare über eine der beiden miteinander verbundenen identischen Wicklungen (13, 14 bzw. 16, 17) dieses gespeisten Transformators angeschlossen sind, dadurch gekennzeichnet, daß die Vorrichtung zwei Gleichrichterbrücken (28, 29) aufweist, die einerseits je mit zwei Eingängen an die Zwischenanschlüsse der beiden Wicklungen eines der gespeisten Transformatoren angeschlossen sind, zwischen die außerdem ein Kondensator (15 bzw. 18), Zwischenkondensator genannt, geschaltet ist, und die andererseits mit ihren Ausgangsanschlüssen (E, G bzw. F, H) parallelgeschaltet sind, an denen die Fernspeisung für die Einrichtung wiederaufgenommen wird.
